# EUROPEAN PATENT SPECIFICATION

(11) **EP 0 911 242 B1**
(45) Date of publication and mention of the grant of the patent: **21.03.2007**
(21) Application number: 98308657.0
(22) Date of filing: 22.10.1998
(51) Int. Cl.: B62B 5/06, B65G 7/12

(54) **Load handling trolley with multi-function handle**
Lastförderwagen mit Mehrzweckhandgriff
Chariot de manutention avec manche à plusieurs usages

(30) Priority: 23.10.1997 GB 9722283
(43) Date of publication of application: 28.04.1999
(73) Proprietor: Blackrock Engineering Limited, Great Budworth, Nr. Northwich, Cheshire CW9 6HF (GB)
(72) Inventor: Irwin, Robert, Liverpool L8 4TH (GB)
(74) Representative: Cardwell, Stuart Martin

(56) References cited:
- FR-A- 2 604 678
- US-A- 1 616 632
- US-A- 3 850 442
- US-A- 3 873 119
- US-A- 5 251 944
- US-A- 5 813 504

## Description

The present invention relates to the operation of load handling trolleys.

US3850442 describes a cart for hauling a bowling ball. Referring to Figure 1, the handle can be used for both pulling the load and lifting the load Similarly, US 1616632 describes a luggage cart with a handle for pulling the load and lifting the cart,

A load handling trolley or skate which is designed to run in a track comprises an elongate loading engager, a series of bogies which are longitudinally moveable with respect to the elongate load engager and cooperable with ramps of the elongate load engager for the purpose of raising and lowering the load engager. An actuating mechanism comprising two pivotally interconnect elements, the first of which is also pivotally connected with the load engager and the other of which is pivotally connected with a chassis of a first bogie assembly, is provided to control raising and lowering of the load engager using a lever which is releasably engageable with the first of said pivotable links.

The lever has to be of a length which enables the operator to generate the required force (magnified under lever action) to raise the load resting on the engager. Usually there are two parallel tracks, each receiving a respective load engager. Downward pivoting of the actuating lever serves to elevate the load engager and raise any load to be supported thereon for movement on the trolley in the tracks. Movement is intended to be imparted directly to the trolley using a separate pulling handle which comprises a J-shaped bar the hooked end of which is designed to be received in a hole in a side frame of the load engager. The use of separate lift actuating handle and pulling handle has been specified since the original conception of the design. The existing design of lift actuating handle is unsuitable for use as a pulling handle since there is a substantial risk of its plain spigoted end pulling out of the reception location. Hence its use for pulling poses a safety risk.

More particularly, any combined handle has to be designed to be releasable from the pivot link, it has to be able to transmit a pulling force to the skate, it has to have a hand grip to facilitate exertion of the pulling force, and the shape of the handle has to avoid damage to the load in use and for causing injury to the operator. Furthermore the shape of the handle has to be such that it can be readily packaged. Furthermore the preferred handle should be capable of being used with existing skates without modification.

In endeavouring to meet all these requirements several solutions have been proposed, but up to the present time none have been arrived at which meet all the desired criteria. The present invention provides a solution.

Accordingly the present invention provides a combined pulling and lift actuating handle for a load handling trolley comprising a shaft having an end spigot adapted to be received in a reception location of the load handling trolley lift actuating mechanism, an abutment on the shaft spaced from the end of the spigot and adapted to cooperate with a body of the load engager to transmit a pulling force to the trolley, and characterised in that by the abutment is a lug which projects to one side of the shaft, the lug having a face which is curved or inclined in a direction towards the spigot end relative to the axis of the handle.

Conveniently the lug is angled in a direction facing towards the spigoted end of the shaft. The angle of inclination may be such that the inclined face which is disposed adjacent to the body of the skate is substantially parallel thereto when the handle is in a position corresponding to the raised position of the load engager.

By arranging for the pulling force to transmitted directly to the load engager body no undue forces are imposed on the pivoting link which would otherwise be disadvantageous to the long term durability of the mechanism.

In order to be able to apply a pulling force to the handle a grip portion has to be provided which is desirably set perpendicular to the axis of the shaft. However, a grip portion which is permanently set perpendicular to the axis of the shaft has several disadvantages. Firstly, when the lever is moved to the upright position corresponding to the lowered position of the load engager, the grip portion may in certain orientations of the handle be brought into contact with the load. This may prevent the load engager from fully lowering or could give rise to damage to the load or it could result in an operator's hand becoming trapped between the handle and the load. None of these situations is entirely satisfactory.

The apparatus of the invention preferably has a grip portion which is pivotally mounted with respect to the shaft.

In one embodiment the pivotal connection of the grip portion with the shaft is disposed at the end of the shaft remote from the spigoted end of the handle. In another embodiment the pivotal grip portion has its pivot connection with the shaft set in from the end of the shaft. This is advantageous as it makes possible the provision of a hand grip on that end of the handle. The grip portion can be pivoted so that it lies at up to a right angle to the shaft in one end position and substantially parallel to the shaft and adjacent same in its other end position.

Advantageously, the abutment and the pivotal grip portion are combined in one handle.

The present invention will now be described further by way of example only with reference to the accompanying drawing; in which:-
Figure 1 is a side view of the lower end of a combined pulling and actuating handle for use with a load trolley,
Figure 1a is an end view on A of Figure 1,
Figure 2 is a side view of the other end of handle for use with a load handling trolley showing a pivotable grip portion,
Figure 3a and 3b are perspective views of one end of a load engager and a combined pulling and actuating handle for use therewith with the handle shown in alternative positions,
Figures 4a - 4d are side views of one end of a lead engager and handle for use therewith, showing the stages in the insertion, lifting and handle removal sequence, and
Figure 5 is a side view of an alternative embodiment of combined pulley and actuating handle.

Referring to the drawings, a load handling trolley or skate is shown at 1 in Figure 3 and comprises a load engager which is moveable with respect to bogies (not shown) by operation of a handle 3 which connects with a pivotable link mechanism 5 (only part of which is illustrated). The pivotable mechanism has a reception bore to receive a plain cylindrical end 9 of the handle 3. The handle is received slidably in the reception bore. The other elements of the load handling trolley are well known and are not described further hereinafter, primarily because they are not pertinent to the invention. The handle comprises a shaft 11 which has a truncated annular collar 13 mounted on it a short distance from the end 9. The truncated collar has a conical surface 15 which in use is presented to an abutment surface 17 of the load engager body. A truncated edge 19 of the collar is set tangentially with respect to the outer circumference of the shaft such that when the handle is rotated to one position and can be removed by axial sliding movement from the reception bore where the handle is in the lowered position. In any other rotational position the collar engages with the load engager and enables a pulling force transmitted to the handle and to be transmitted directly to the load engager permitting the trolley to be moved along its track.

In order to be able to transmit a pulling force to the handle it is provided with a grip portion 25 which is pivotally connected at 26 to the end of the shaft. The grip portion is pivotable between a position where it lies parallel with the shaft as illustrated in Figure 2 and a position disposed perpendicular thereto. In order to ensure adequate force transmission to the handle and yet to avoid accidental trapping of the operator's hand between the grip portion and the shaft the connection is arranged such that the grip portion abuts the end of the shaft when pivoted into its perpendicular position. The end 27 of shaft 11 is cut away to allow pivoting movement of the grip portion. Two plates 29 are welded to the grip portion and drilled to receive a pivot pin 27 which passes through a hole in the shaft. The grip portion has a rubber grip 31. Conveniently the end 33 of the handle is formed from a separate component which has a reduced diameter portion which is fitted into a bore in the handle and is welded in place.

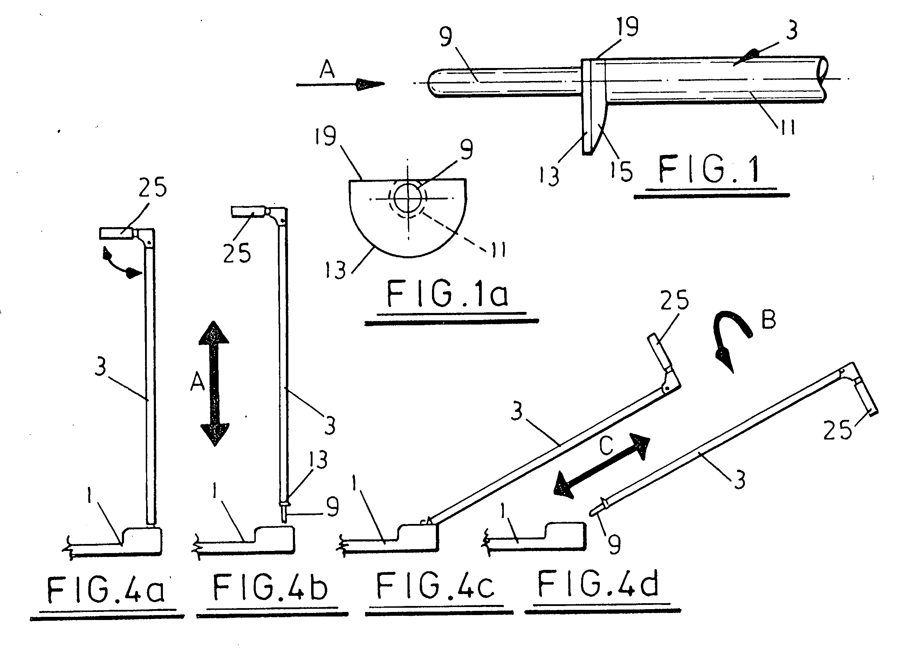

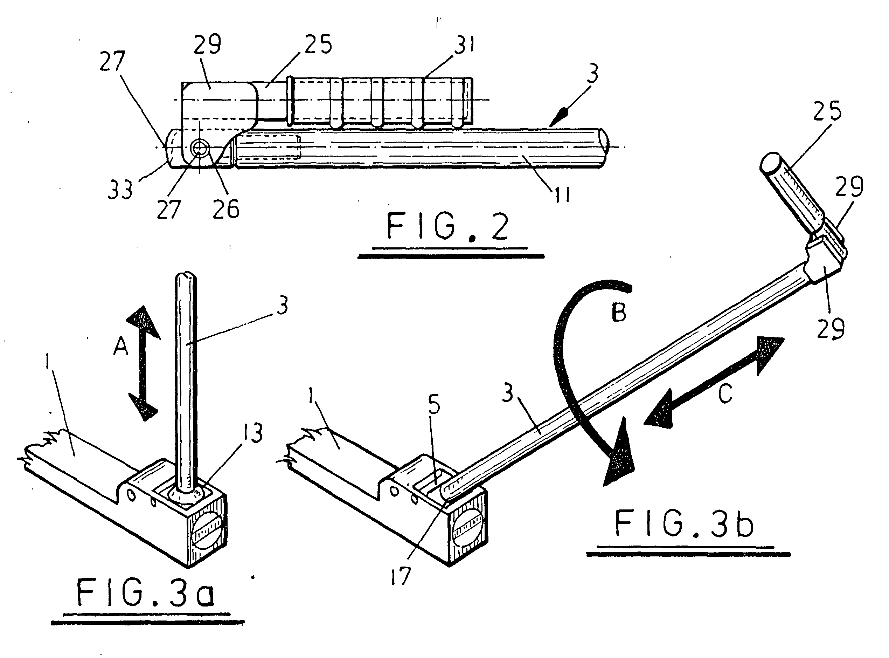

Figure 3a shows the handle inserted in the pivotable link mechanism of the load engager in a position corresponding to a lowered position. Figure 4a shows the same position, but with the hand grip pivoted to its perpendicular position. Arrow A indicates the direction of sliding movement for engaging and disengaging the handle with the trolley lift actuating mechanism. Note that the truncated flange 19 of collar 13 is shown positioned facing away from the front end of the trolley. When the lever is upright it can be inserted and removed in this position or in any other rotational position. Figures 3b, 4c and 4d show the handle moved to a position which it adopts when the load engager is elevated. The collar 13 will engage with abutment 17 if a pulling force is exerted on the handle. This ensures that the handle remains in position. If it is desired to remove the handle whilst the load engager is in its elevated position, the handle is rotated - as denoted by arrow B until the truncated flange 19 is lowermost, (in which position the grip portion 25 points downwardly), whereupon movement of the handle in the direction of arrow C allows the handle to be removed. Conversely, it may be inserted by movement in the opposite direction. The skate may be lowered by upward pivotal movement of the handle. During such an operation it may be preferable for the grip portion to be folded into the position shown in Figure 2 or to be pointing away from any load on the trolley in order to avoid damage or injury to the load or the operator.

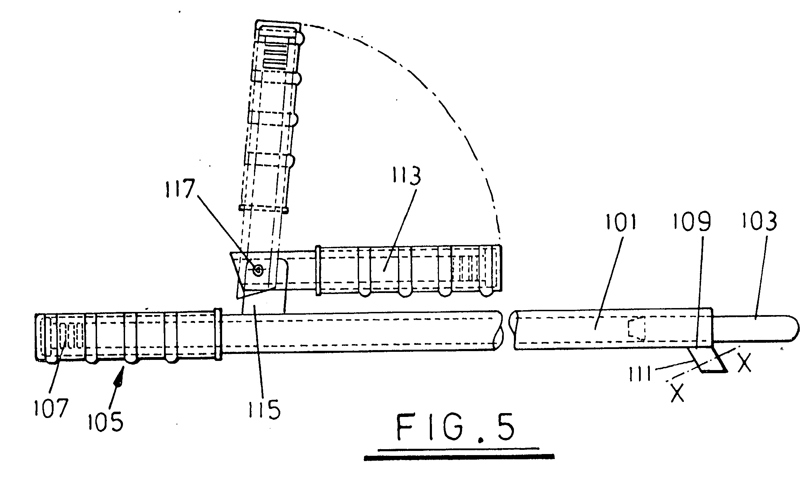

Referring now to Figure 5, an alternative embodiment of combined pulling and actuating handle is illustrated. It comprises an elongate shaft 101 having a reduced diameter spigot 103 at one end and a hand grip 105 at the other end. The hand grip is provided by a ribbed plastic sleeve 107 which is pushed on to said other end of the shaft. The spigot 103 is received in the end of the shaft which is hollow and is welded in place. A lug 109 is welded to the shaft adjacent the step in diameter where the spigot projects from the end.

In the preferred embodiment the lug is made from bar which is square in section as viewed on section line XX. It is located at an angle with its free end directed towards the spigot end of the handle. This provides an inclined surface 111 which will align with a end wall of the load engager when this embodiment of handle is used in place of that illustrated in the preceding figures. I.e. it provides a more economical alternative to the collar of the preceding embodiment. Its method of use is the same as the previously described embodiment i.e. requiring rotation of the handle after insertion of the spigot to bring the lug into engagement with the body of the load engager. A pivotal grip portion 113 is provided but in this embodiment its pivot connection with the shaft is inset from the end remote from the spigot. The grip 113 comprises a hollow sleeve the wall of which is partially cut away to allow it to be mounted for pivotal movement with respect to a bracket 115 welded to and projecting from the handle. The pivot axis is shown at 117. The pivotable grip portion has a ribbed plastic sleeve fitted thereto.

The solid outline shows the pivotal grip portion in a first end position in which it is pivoted forwardly to lie substantially parallel to the elongate shaft. The dotted outline shows the pivotal grip portion in its other end position. The cooperation of the wall of the hollow sleeve with the bracket 115 limits pivoting thereof. The bracket is inclined so that the pivotal grip portion is inclined from the perpendicular to the axis of the handle. The included angle is 85° in the illustrated embodiment.

The hand grip 105 is useful in movement of the handle to elevate the load engager. The forward positioning of the pivotal grip portion places it out of the operators way during movements for raising and lowering of the load engager.

The embodiment of collar shown in Figures 1 to 4 may be used with the embodiment of Figure 5 and the lug of the Figure 5 embodiment may be used with the embodiment of Figures 1 to 4.

## Claims

1. A combined pulling and lift actuating handle for a load handling trolley (1) comprising a shaft (101) having an end spigot (103) adapted to be received in a reception location of the load handling trolley lift actuating mechanism, an abutment (109) on the shaft spaced from the end of the spigot and adapted to cooperate with a body of the load engager to transmit a pulling force to the trolley, **characterised in that** the abutment (109) is a lug (109) which projects to one side of the shaft, the lug having a face (111) which is curved or inclined in a direction towards the spigot end (103) relative to the axis of the handle (3).

2. Apparatus as claimed in claim 1 further comprising a grip portion (113) which projects from the handle and is disposed substantially perpendicular thereto.

3. Apparatus as claimed in claim 2, in which the grip portion (113) is pivotally mounted to the handle to be pivotal from a position lying substantially parallel to the axis of the handle up to a position lying up to 90 DEG thereto.

4. Apparatus as claimed in claim 3 in which the pivotal connection is at the end of the handle remote from the spigot (103).

5. Apparatus as claimed in claim 3 in which the pivotal connection (117) of the grip portion (113) is inset from the end of the handle remote from the spigot end (103).

6. Apparatus as claimed in claim 4 or 5, in which the handle has a further grip portion mounted between said pivotal connection and said remote end.

7. Apparatus as claimed in anyone of claims 1 to 6, in which the lug (109) is configured to permit insertion and release of the spigot end (103) by axial sliding movement when the handle is in one rotational position.

## Patentansprüche

1. Ein kombinierter Zug- und Hubauslösehandgriff für einen Lastförderwagen (1), umfassend eine Deichsel (101), die einen Endzapfen (103) aufweist, der dazu angepasst ist, in einer Aufnahmestelle des zu betätigenden Hubmechanismus des Lastförderwagens aufgenommen zu werden, einen Anschlag (109) auf der Deichsel, der von einem Ende des zapfens beabstandet ist und der so angepasst ist, mit einem Hauptteil des Lastträgers zusammenzuwirken, um so eine Zugkraft auf den Wagen zu übertragen, **dadurch gekennzeichnet, dass** der Anschlag (109) ein Ansatz (109) ist, welcher auf einer Seite der Deichsel hervorsteht und der Ansatz eine Gestalt aufweist, welche in einer Richtung zum Endzapfen (103) hin bezüglich der Achse des Handgriffs (3) gekrümmt oder geneigt ist.

2. Vorrichtung nach Anspruch 1, die ferner ein Griffstück (113) aufweist, welches von dem Handgriff absteht und im Wesentlichen senkrecht dazu angeordnet ist.

3. Vorrichtung nach Anspruch 2, in welcher das Griffstück (113) schwenkbar am Handgriff angebracht ist, um zwischen zu einer Position, die hauptsächlich parallel zur Achse des Handgriffs verläuft, nach oben bis zu einer Position, die nach oben bis zu 90° dazu liegt, schwenkbar zu sein.

4. Vorrichtung nach Anspruch 3, in welcher sich die schwenkbare Verbindung am Ende des Handgriffs entfernt vom Endzapfen (103) befindet.

5. Vorrichtung nach Anspruch 3, in welcher die schwenkbare Verbindung (117) des Griffstücks (113) vom Ende des Handgriffs entfernt vom Endzapfen (103) eingesetzt ist.

6. Vorrichtung nach Anspruch 4 oder S, in welcher der Handgriff ein weiteres Griffstück hat, welches zwischen der schwenkbaren Verbindung und dem entfernten Ende angebracht ist.

7. Vorrichtung nach einem der Ansprüche 1 bis 6, in welcher der Ansatz (109) so gestaltet ist, das Einfügen und die Freigabe des Endzapfens (103) durch eine axial gleitende Bewegung zu ermöglichen, wenn sich der Handgriff in einer Rotatonsstellung befindet.

## Revendications

1. Poignée combinée d'actionnement de traction et de levage pour chariot de manutention (1), comprenant un arbre (101) ayant un ergot d'extrémité (103) adapté pour être reçu dans un emplacement de réception du mécanisme d'actionnement de levage du chariot de manutention, une butée (109) sur l'arbre espacée de l'extrémité de l'ergot et adaptée pour coopérer avec un corps du dispositif de mise en prise de charge pour transmettre une force de traction au chariot, **caractérisée en ce que** la butée (109) est une oreille (109) qui fait saillie vers un côté de l'arbre, l'oreille ayant une face (111) qui est incurvée ou inclinée dans un sens orienté vers l'extrémité d'ergot (103) par rapport à l'axe de la poignée (3).

2. Appareil selon la revendication 1, comprenant en outre une partie de préhension (113) qui fait saillie depuis la poignée et qui est disposée sensiblement perpendiculairement à celle-ci

3. Appareil selon la revendication 2, dans lequel la partie de préhension (113) est montée de manière pivotante sur la poignée pour pouvoir pivoter d'une position sensiblement parallèle à l'axe de la poignée à une position allant jusqu'à 90 degrés par rapport à celle-ci.

4. Appareil selon la revendication 3, dans lequel la connexion pivotante est située à l'extrémité de la poignée qui est éloignée de l'ergot (103).

5. Appareil selon la revendication 3, dans lequel la connexion pivotante (117) de la partie de préhension (113) est décalée vers l'intérieur par rapport à l'extrémité de la poignée éloignée de l'extrémité d'ergot (103).

6. Appareil selon la revendication 4 ou 5, dans lequel la poignée a une partie de préhension supplémentaire montée entre ladite connexion pivotante et ladite extrémité éloignée.

7. Appareil selon l'une quelconque des revendications 1 à 6, dans lequel l'oreille (109) est configurée de manière à permettre l'insertion et le dégagement de l'extrémité d'ergot (103) par un mouvement de coulissement axial lorsque la poignée est dans une position de rotation.
